Europäisches Patentamt

European Patent Office

Office européen des brevets

(19)

(11) **EP 1 505 435 A1**

(12) **EUROPEAN PATENT APPLICATION**

(43) Date of publication:
**09.02.2005 Bulletin 2005/06**

(51) Int Cl.7: **G03B 21/20**

(21) Application number: **03017892.5**

(22) Date of filing: **05.08.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(71) Applicant: **Sony International (Europe) GmbH 10785 Berlin (DE)**

(72) Inventors:
• **Kamm Markus 70327 Stuttgart (DE)**

• **Facius, Zoltan 70327 Stuttgart (DE)**
• **Würtenberger, Dagmar 70327 Stuttgart (DE)**

(74) Representative: **Müller - Hoffmann & Partner Patentanwälte, Innere Wiener Strasse 17 81667 München (DE)**

(54) **Illumination unit having two discharge lamps for a projector**

(57)    The present invention enables a particular compact design for an illumination unit (1) and for a projection engine (100) having a comparable small and limited optical extent by providing for each lamp (10a, 10b) within said illumination unit (1) a collecting reflector (15a, 15b) and a directing reflector (25), wherein said collecting reflector (15a, 15b) is disposed adjacent to said respective lamp (10a, 10b) and adapted for redirecting primary illumination light (L1) emitted into a first part $\Omega 1$ of the illumination solid angle $\Omega$ of the respective lamp (10a, 10b) to the respective directing reflector (25a, 25b). The respective directing reflector (25a, 25b) is adapted for directing primary illumination light (L1) emitted into a second fraction $\Omega 2$ of the illuminating solid angle $\Omega$ of the respective lamp (10a, 10b) and said redirected primary illumination light (L1') to a common light output section (O) of the illumination unit (1).

Fig. 2A

EP 1 505 435 A1

**Description**

The present invention relates to an illumination unit, in particular for a projection engine or the like, and further to a projection engine comprising the inventive illumination unit.

Nowadays, many electronic appliances are available which have imaging capabilities. One objective and further developing known opto-electronic appliances is to reduce the size of such appliances and equipment. Further, a major aspect of further developing opto-electronic appliances and equipment is to improve the functionalities of these appliances.

These aspects are in particular important with respect to illumination units which are provided in such appliances, for instance in projection engines or the like. In known illumination units it is comparable difficult to manage the balance between the light output being necessary for the imaging functionalities and the space consumption by the respective elements and members which are necessary for providing the necessary light output or brightness.

It is an object of the present invention to provide an illumination unit and a projection engine, which enable a geometrically compact design and which are at the same time reliable and offer supreme illumination characteristics.

The object is achieved by an illumination unit according to claim 1 and by a projection engine according to claim 15. Preferred embodiments are within the scope of the respective dependent sub claims.

The inventive illumination unit is in particular adapted for or to be used in a projection engine or the like. The inventive illumination unit comprises a lamp arrangement, a primary or collecting optical arrangement and a secondary or directing reflector arrangement as a secondary or directing optical arrangement. The secondary or directing reflector arrangement and therefore the lamp arrangement have a common light output section, portion or area.

The lamp arrangement comprises at least a first and a second lamp and is adapted for generating and emitting primary illumination light.

The primary or collecting optical arrangement comprises at least one primary or collecting optical component, and said secondary or directing reflector arrangement comprises at least one secondary or directing reflector.

According to the invention each given one of said at least one of said first and second lamp of the lamp arrangement has assigned thereto a primary or collecting optical component and a secondary or directing reflector. The respective assigned one primary or collecting optical component is in each case disposed adjacent or in close neighborhood or vicinity to said respective given lamp in particular close in comparison with conventional arrangements of lamps and optical components.

Additionally, said respective assigned one primary or collecting optical component is adapted and arranged for receiving and collecting primary illumination light emitted into a first fraction or part $\Omega 1$ of the illumination solid angle $\Omega$ of said respective given lamp and for redirecting said collected primary illumination light as redirected primary illumination light to said respective assigned one secondary or directing reflector. The respective assigned secondary or directing reflector is adapted and arranged for receiving and collecting primary illumination light emitted into a second fraction or part $\Omega 2$ of the illumination solid angle $\Omega$ of said respective given lamp and said redirected primary illumination light from said respective assigned primary or collecting reflector and for redirecting and emitting said received collected primary illumination light and said received redirected primary illumination light to said common light output section, portion or area.

According to the present invention said first and second parts or fractions $\Omega 1$, $\Omega 2$ of the illumination solid angle $\Omega$ of said respective given lamp are essentially disjunct, complementary and/or have at most a marginal overlap.

According to the present invention said at least one primary or collecting optical component (15, 15a, 15b, 17) is assigned to said first and second lamps (10a, 10b) is adapted and arranged for covering a respective first fraction or part $\Omega 1$ of the respective assigned lamp (10a, 10b) illumination solid angle $\Omega$ which is in each case approximately one hemisphere or fulfills

$$\Omega 1 \approx 2\pi \cdot sr.$$

Said secondary or directing reflector arrangement comprise also two secondary or directing reflectors, i.e., a first and a second secondary or directing reflector which are assigned to the respective lamps.

There are different basic ideas independently realized by the present invention:

First of all, according to the present invention, the optical arrangement which is necessary for each illumination unit is subdivided into a first, primary or collecting optical arrangement and a second, secondary or directing reflector arrangement. Each lamp has assigned thereto a primary or collecting optical component of said and collection reflector arrangement and a secondary reflector of said secondary or directing reflector arrangement.

A further key aspect of the present invention is that in each case said primary or collecting reflector is disposed adjacent or in close neighborhood or vicinity to the respective assigned given lamp, thereby reducing the optical extent and the geometrical dimensions of the arrangement built by the combination of the primary reflector, the lamp and the secondary reflector.

To fulfill the illumination and brightness requirements the respective primary or collecting optical components or reflectors and secondary and directing reflectors are designed and arranged in a particular way so as to enable a particular high light output or brightness. These requirements are in particular achieved by enabling the primary or collecting optical component or reflector and the secondary or directing reflector to cover first and second parts or fractions $\Omega 1$ and $\Omega 2$ of the illumination solid angle $\Omega$ which is illuminated or irradiated by the respective given lamp, wherein said first and second parts or fractions $\Omega 1$, $\Omega 2$ are essentially disjunct, complementary and/or have at most a marginal overlap.

Summing up these facts it turns out that according to the invention space is saved by reducing the space being occupied by the reflector arrangements and the arrangement is adapted to give a particular high light output or brightness per unit volume of the device.

According to a preferred embodiment of the present invention said primary or collecting optical arrangement accordingly comprises at least a first and a second primary or collecting reflector as said primary or collecting optical components.

These two primary or collecting reflectors may be advantageously assigned to said first and second lamps, respectively. The two primary or collecting reflectors are adapted and arranged for covering a respective first fraction or part $\Omega 1$ of the respective assigned lamps' illumination solid angles $\Omega$ which are in each case approximative one hemisphere or obey $\Omega 1 \approx 2\pi \cdot sr$.

It is a further aspect of the present invention that the used lamp or lamps is/are in each case built by a discharge lamp, in particular having an illumination plasma region between two discharge electrodes.

In this particular case it is of further advantage when each of said primary or collecting optical components or reflectors is adapted and arranged for redirecting said redirected primary illumination lights to the assigned secondary or directing reflectors by focussing said redirected primary illumination light through the illuminating plasma region of a respective assigned lamp. This enables a particular disturbance-free transmission of the redirected primary illumination light from the primary or collecting reflector to the respective assigned secondary or directing reflector, as the respective illuminating plasma region is in each case a spatial region having a comparative low absorption coefficient.

According to a further alternative of the present invention the respective primary or collecting reflectors are built as spherical mirrors or partly spherical mirrors. These spherical mirrors or partly spherical mirrors may be arranged in an approximative concentrically manner with respect to the respective illumination plasma regions of the respective assigned lamp. According to this measure it is possible to enable a transmission of the redirected primary illumination light through the illuminating plasma region so as to enable a particular low absorption during the process of transmission from the primary or collecting reflector to the secondary or directing reflector.

Additionally or alternatively the respective primary or collecting reflectors are built as aspherical or freeform mirrors.

Each of said primary or collecting optical components or reflectors may be built up as an integral part of the respective lamp, in particular as a part of its housing or its discharge tube. According to this particular measure it is possible to realize a further compactified design saving even more space in comparison with conventional reflector arrangements.

Further alternatively or additionally each of said primary or collecting reflectors may be formed of a surface film, in particular of the respective lamps' surface, and further in particular as a reflective and non-absorbing film or multilayer, in particular a dielectric coating, in each case.

According to a further aspect of the present invention said secondary or directing reflector may be in each case a parabolic mirror or a partly parabolic mirror, being adapted and arranged for directing the received primary illumination light and the received redirected primary illumination light to said common light output section.

Further additionally or alternatively, said secondary or directing reflector may be an elliptic mirror or a partly elliptic mirror and in particular being adapted and arranged for directing the received primary illumination light and the received redirected primary illumination light to said common light output section, in particular by having the illuminating plasma region of the respective assigned lamp in its one focal region or focal point or in a vicinity thereof.

According to a further aspect of the present invention, an illumination unit is provided wherein each of the said primary or collecting reflectors is a freeform shaped mirror, in particular a general aspheric mirror.

It can be an advantage, if said primary or collecting optical arrangement is a lens or lens system, in particular with spherical or aspherical lenses, which is arranged between the said first and second lamps and which is adapted for covering a first fraction or part $\Omega 1$ of the respective assigned lamps illumination solid angle $\Omega$ and where the light emitting region of each lamp is imaged by means of the lens or lens system into the light emitting region of the respective other lamp. In this case the lens or lens system substitutes the primary or collecting reflector arrangement.

It may also be preferred that said second or directing reflector is a general aspheric or freeform shaped mirror, in particular being adapted and arranged for directing the received primary illumination light and the received redirected primary illumination light to said common light output section.

It is a further aspect of the present invention to provide a projection engine having an illumination unit which is built up in accordance with the invention.

It is a further aspect of the present invention to apply the inventive illumination unit in an optical decive said optical device in particular requiring a comparable high lumen output, luminous flux, radiant flux and/or the like, in particular in a comparable limited solid angle or space angle, and/or said optical device requiring a comparable high lumen efficiency.

In addition or alternatively, the inventive illumination unit may be applied in a spectral measurement device, wherein a small spectral band is generated and/or the intensity of which has to be high enough for enabling a measurement at a probe, in a light pump source for a laser device for initializing the respective laser process, and/or in an UV light source for producing a structure on a semiconductor wafer.

These and further aspects of the present invention will be further explained by the following remarks:

The lumen output or brightness is a key parameter to describe the quality of today's illumination units or video projectors. In order to fulfil the continuous demand for higher lumen output, designers are going to use lamps with higher electrical power or wattage. But lamps with higher wattage have the general drawback of shorter lifetime.

Projectors using multiple lamps avoid this drawback by using a number of lamps, typically 2 or 4, each with lower wattage and thus higher lifetime. An Additional benefit is the reliability: If one lamp fails the other (s) are still working. But existing multiple lamp projectors have the drawback of a high optical extent in their optical path and thus bigger size and higher price of the optical parts.

The present invention gives a solution by integrating two HID lamps or high intensity discharge lamps in a special way into the optical system without significantly increasing the optical extent of the system.

Projection engines using multiple lamps already exist in the market. E.g., two tilted lamps may be directed towards a first integrator plate. Integrator plates are commonly used in projectors to illuminate the imager panel uniformly and in a rectangular shape. The first integrator plate consists of a lens array, each lens having the same shape as the imager device to be illuminated, e.g. rectangular. The light bundle coming from each reflector is split by the number of lens segments of the first integrator plate. Each lens segment focuses the light onto a corresponding lens segment of a second integrator plate, thereby forming images of the arc of the lamp on the second integrator plate. Two separated arc images are formed in each segment of the second integrator plate, because they are illuminated with two tilted lamps. Therefore each segment has to be approximately twice as big as compared to the case when only one lamp is used.

Also integrator plates may be used, in particular together with cylindrical lenses. But there each lamp is illuminating only one half of the integrator plates. Cylindrical lenses are used to squeeze the width of each illuminating light bundle by half. But due to squeezing the light bundle the size of the arc images in the lens segments becomes approximately twice as big.

In both above mentioned cases the optical extent of the optical system is approximately doubled. Optical extent is also known as 'etendue' or the 'optical invariant'.

The bottleneck for passing light is in most projection apparatuses the imager panel. Usually this imager panel is a LCD or Liquid Crystal Display or a DMD or Digital Mirror Device. Both types of imager panels have a limited angle of acceptance, typical about 10° to 12°. Together with the size of the panel this angle of acceptance determines the limit in optical extent which a light bundle can have to pass the imager panel. An illuminating light bundle with higher optical extent than this limit cannot pass the panel completely. The part which is "above" this limit is cut away.

With a given imager panel and thus with ,a given limit in the optical extent of the illuminating light bundle the lumen throughput of a light engine can be enhanced by using higher wattage lamps. Those lamps have only slightly bigger optical extent but significantly higher lumen output, all in all giving a higher throughput. The drawback of high wattage lamps is their reduced lifetime.

To overcome this lifetime drawback, multiple lamps with lower wattage of each can be used. But in all of the state of the art light engines the use of multiple lamps increases the optical extent of the optical path drastically. Therefore bigger imager panels and optical parts are needed, which increases the cost.

The main advantageous differences between the invention and the state of the art are as follows:

The present invention describes a method to integrate two lamps into a single projection engine without significantly increasing the optical extent of the optical path. This enhances the lumen output of the projector.

Existing systems using a single lamp with high wattage also have a high lumen output but at cost of lamp lifetime.

Existing systems using multiple lamps can achieve a high lumen output but at cost of drastically increasing the optical extent and thus bigger size and higher price of the optical parts and the imager device.

Therefore the presented dual lamp system is of particular advantage in small sized and lower cost projectors where the optical extent is limited.

The invention and advantageous details thereof will be explained by way of an exemplary embodiments thereof in the following taking reference to the accompanying figures.

**Fig. 1A, 1B** show demonstrate by means of a schematical and cross-sectional side view and front view, respectively, some basic aspects of the present invention.

**Fig. 2A, 2B**    show a preferred embodiment of the present invention by means of a schematical and cross-sectional side view and front view, respectively.

**Fig. 3**    shows a further preferred embodiment of the present invention by means of a cross-sectional side view.

**Fig. 4**    shows a further preferred embodiment of the present invention by means of a cross-sectional side view.

**Fig. 5A, 5B**    show by means of cross-sectional side views projection engines.

**Fig. 6**    shows a further preferred embodiment of the present invention by means of a cross-sectional side view.

In the following, elements and components having the same structure and/or having the same functionalities are described by taking reference to the same reference symbols. The description of these elements and components will not be repeated in each case.

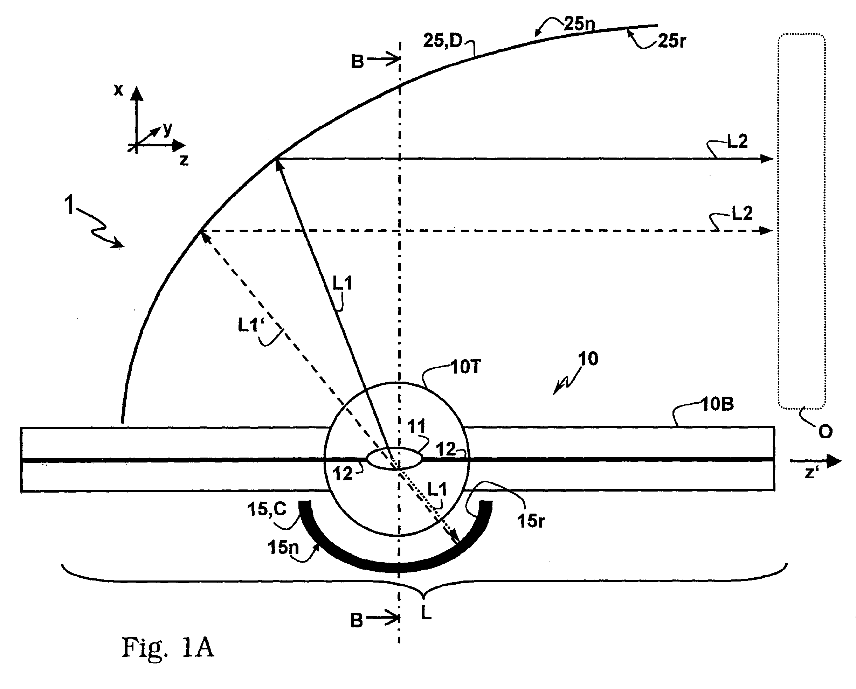

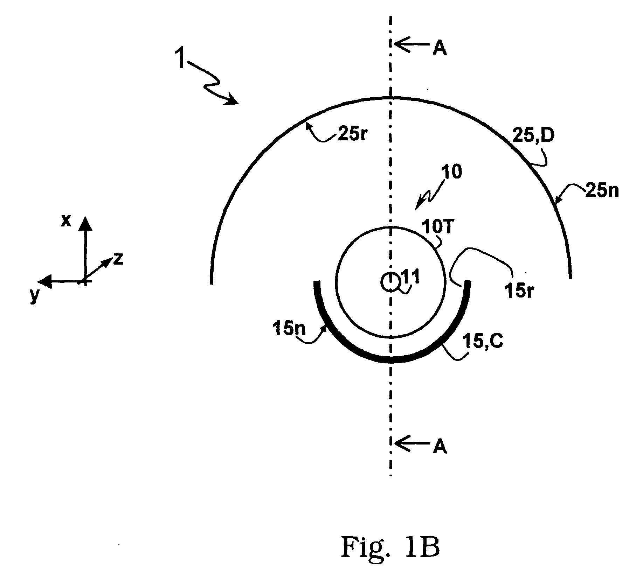

Figs. 1A and 1B demonstrate by means of schematical and cross-sectional side views and front views some aspects of the illumination unit 1 according to the present invention.

In this situation only one single lamp 10 is shown in the lamp arrangement L. This single lamp 10 is constituted by a lamp body 10B of essentially cylindrical shape having a plasma discharge tube 10T in its central region. Additionally, first and second electrodes 12 are provided, the tips of which being spatially separated with respect to each other and being adapted for forming a plasma discharge arc or forming an illuminating plasma region 11.

During the discharge process primary illumination light L1 is irradiated from the illuminating plasma region 11 approximately into the complete solid angle

$$\Omega 1 \approx 4\pi \cdot sr,$$

if the angle contributions covered by the electrodes 12 and the lamp body 10B are neglected for better understanding.

The electrodes 12 of the lamp 10 are extended in collinear relationship with respect to each other building an axis z' parallel to the z-axis of the underline coordinate system. A plane containing the electrode axis z' and being perpendicular to the plane of the drawing sheet subdivides the complete space into a lower hemisphere and an upper hemisphere. Almost the complete lower hemisphere defining a first fraction, part or portion $\Omega 1$ of the complete illumination solid angle $\Omega$ is covered by a primary or collecting reflector 15 in this case building the only primary or collecting reflector 15 of the primary or collecting reflector arrangement C of the present invention and having a first, inner or reflecting surface 15r and a second, outer surface 15n.

In the embodiment of figures 1A and 1B said primary or collecting reflector 15 is a spherical mirror. Primary illumination light L1 emitted into the first solid angle fraction $\Omega 1$ of the illumination solid angle $\Omega$ of the lamp 10 is reflected on the reflecting surface 15r of the primary reflector 15, transmitted back through the illuminating or illumination plasma region 11 of the lamp 10 and thereby directed as redirected primary illumination light L1' to a secondary or directing reflector 25 which covers a second fraction, part or portion $\Omega 2$ of the illumination solid angle $\Omega$ of the lamp 10 and which builds the only and single secondary or directing reflector 25 of the secondary or directing reflector arrangement D of the embodiment of figures 1A and 1B.

The secondary or directing reflector 25 covers at least a part of the upper hemisphere as described above. Said secondary or directing reflector 25 therefore receives primary illumination light L1 from the lamp 10 which is emitted into the second fraction $\Omega 2$ of the illumination solid angle $\Omega$ directly as well as said redirected primary illumination light L1' from the primary or collecting reflector 15. Both light components are reflected on the reflecting surface 25r of the secondary or directing reflector 25 as secondary illumination light L2 which leaves the inventive illumination unit through the common light output section O.

As is shown in figure 1B the illuminating plasma region 11, the plasma discharge tube 10T, the primary or collecting reflector 15, i.e., the spherical mirror 15, and the secondary or directing reflector 25, i.e., the parabolic or elliptical mirror 25, are arranged in a concentric manner.

The views of figures 1A and 1B are indicated in figures 1B and 1A by the lines A-A and B-B, respectively.

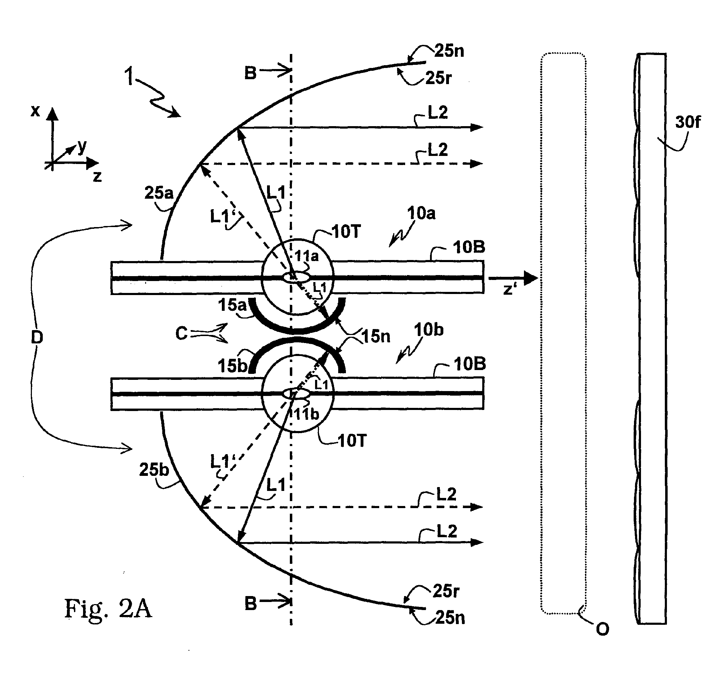

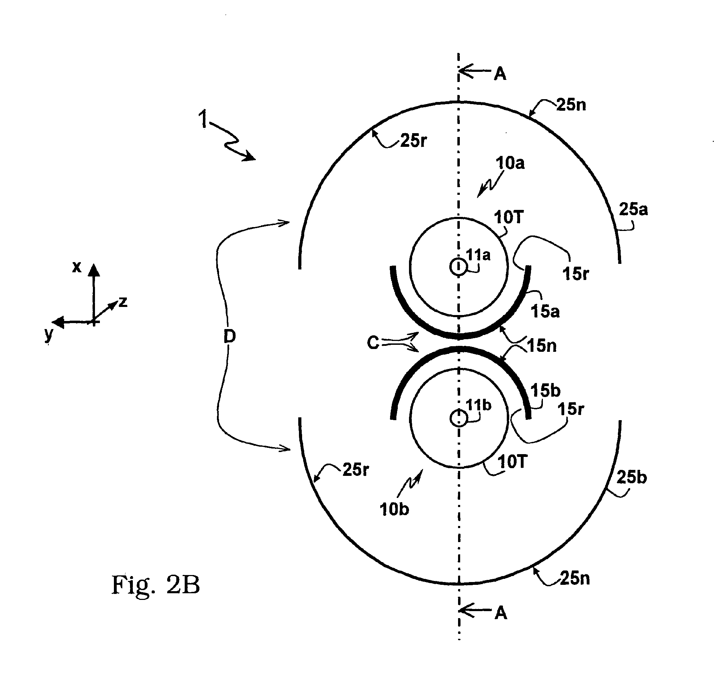

Figures 2A and 2B demonstrate another advantageous embodiment of the inventive illumination unit 1, wherein the lamp arrangement L comprises a first lamp 10a and a second lamp 10b. The primary or collecting reflector arrangement C comprises a first primary or collecting reflector 15a and a second primary or collecting reflector 15b. The secondary or directing reflector arrangement D comprises in this case a first secondary or directing reflector 25a and a secondary or directing reflector 25b.

As can be seen from the comparison of the arrangement of figures 2A and 2B with the arrangement of figures 1A and 1B, the former is a duplicated and line-symmetrical arrangement of the latter.

This arrangement shows a particular compact and geometrical back-to-back relationship, wherein the surfaces 15n of the primary or collecting reflectors 15a and 15b are arranged adjacent and facing each other having the secondary or directing reflectors 25a and 25b at opposite and distal positions.

Again, the secondary or directing reflectors 25a and 25b, here in the form of partially parabolic mirrors, have a common light output section O, in the vicinity of which a first integrator plate 30f is disposed.

Figure 2B again demonstrates a schematical and cross-sectional front view of the arrangements of figure 2A. Each of the duplicated arrangements of the respective illuminating plasma regions 11a and 11b, lamps 10a and 10b, primary or collecting reflectors 15a and 15b and secondary or directing reflectors 25a and 25b, are arranged in an essentially concentric manner having in each case the respective plasma region 11a, 11b in its center or central position.

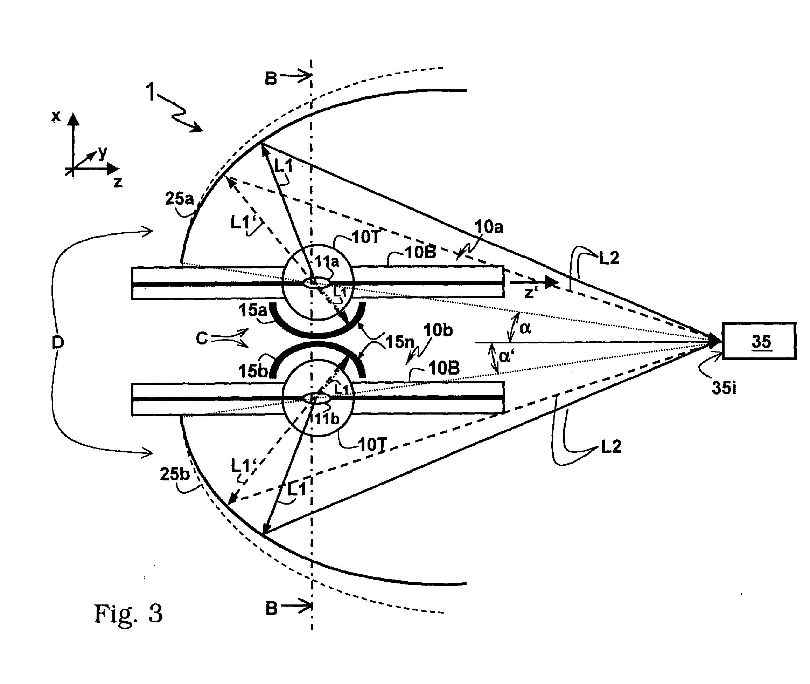

Figure 3 shows by means of a schematical and cross-sectional side view a further preferred embodiment of the inventive illuminating unit 1. The arrangement of figure 3 is essentially comparable to the arrangement of figure 2A, except in that instead of parabolic reflectors 25a, 25b of the arrangement of figures 2A and 2B, elliptical secondary or directing reflectors or mirrors 25a and 25b are used in the arrangement of figure 3. Additionally, the lamps 10a and 10b are arranged the way that the respective illuminating plasma regions 11a and 11b are disposed in one focal region or focal point of the respective elliptical secondary or directing reflector or mirror 25a, 25b, respectively, or the vicinity thereof. As the secondary or directing reflectors 25a and 25b are tilted by angles $\alpha$, $\alpha'$ compared to the arrangement of figure 2A, the secondary illumination light L2 is in each case focussed on a common light output section O which coincides in this case with the light entrance 35i of an integrator rod or light pipe 35.

The cross-sectional front view of the arrangement of figure 3 would be comparable to that shown in figure 2B.

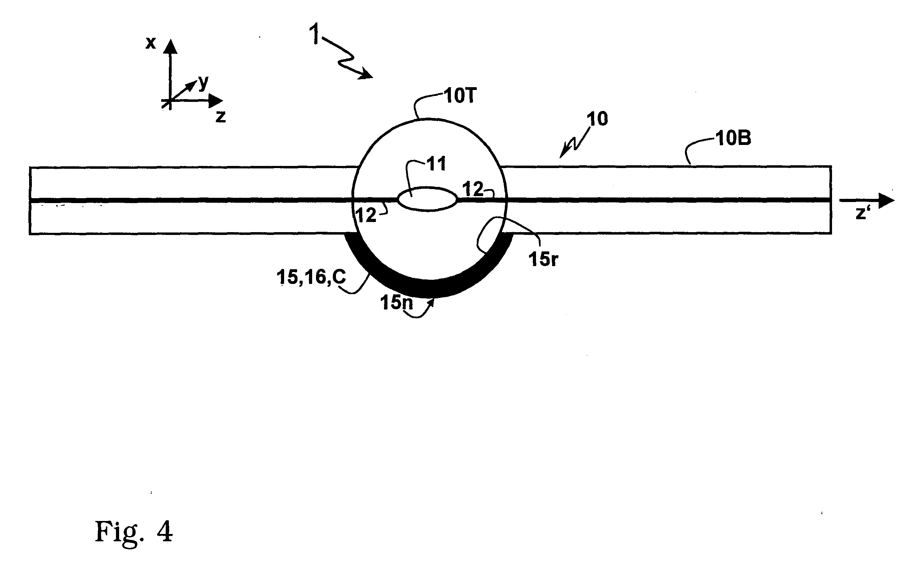

Figure 4 shows a part of a further advantageous embodiment of the inventive illumination unit 1 wherein a lamp 10 is integrally provided with a spherical mirror 15 as a surface region 16 of the discharge tube 10T of the lamp 10, which surrounds the tips of the electrodes 12 as well as the plasma discharge region 11 being located in a central portion of the body 10b of the lamp 10 of figure 4.

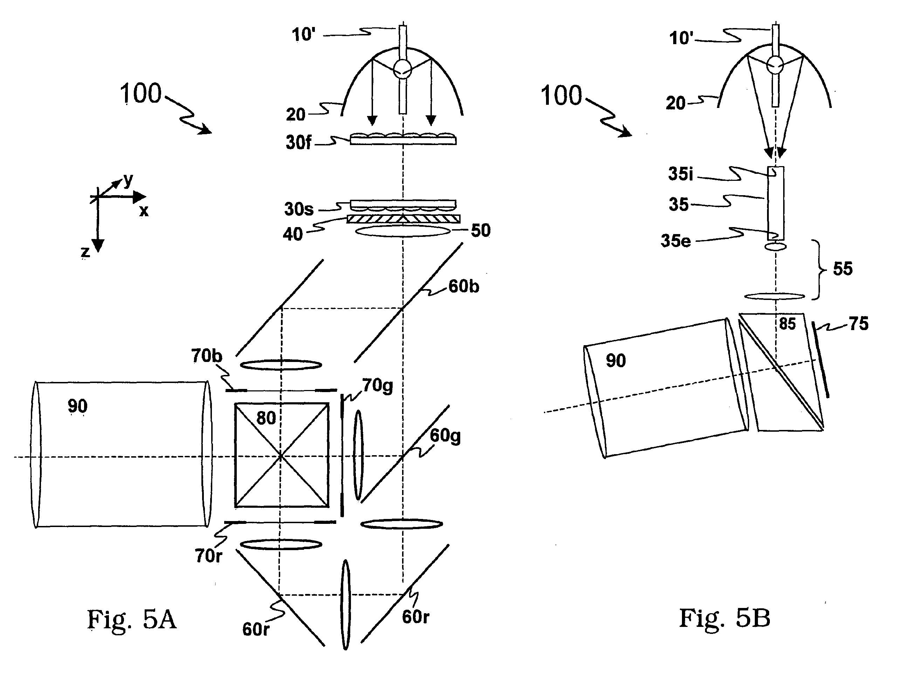

Figures 5A and 5B demonstrate arrangements of conventional projection engines 100.

Figure 5A shows schematically the optical path of a LCD projector using integrator plates for shaping a rectangular and uniform light bundle on the imager panel. Light emitted from the lamp 10 is collected by a parabolic reflector 20. The collimated light bundle is entering the first integrator plate 30f. The lens segments are focusing onto the corresponding segments in the second integrator plate 30s, thereby forming images of the lamp's arc in each segment of the second integrator plate. The rectangular apertures of the first integrator plate are imaged by the lens segments of the second integrator plate and the condenser lens 50 onto the red, green and blue LCD panel 70r, 70g, 70b, respective. The light is pre-polarized by the polarization conversion system 40 and split into it's primary colors red, green and blue by the dichroic mirrors 60b and 60g. After transmitting the LCD panels the light is recombined by the X-cube 80 and projected by the lens 90 onto a screen.

Figure 5B shows schematically the optical path of a DMD projector using an integrator rod for shaping a rectangular and uniform light bundle on the imager panel. Light emitted by the lamp 10 is collected by the elliptical reflector 20 and is focused into the entrance 35i of the integrator rod 35. Inside the integrator rod the light is redirected several times by total internal reflection, thereby illuminating the rectangular shaped exit 35e of the integrator rod uniformly. The exit of the integrator rod is imaged by means of the condenser lenses 55 onto the DMD panel. The light is redirected inside the TIR (total internal reflection) prism 85. After reflection on the DMD panel 75 the light is projected by the lens 90 onto a screen.

Any arrangement for the inventive illuminating unit 1 as shown in figures 1 to 4 can be substituted into the conventional projection engines figures 5A and 5B to arrive to projection engines according to the present invention.

In order to overcome the drawback of increased optical extent when combining two lamps in a projection engine, the lamps 10, 10a and 10b are each provided alongside with a spherical mirror 15, 15a and 15b, respectively, as demonstrated above by figures 1A to 3. Light L1 emitted into the hemisphere of the spherical mirror 15, 15a and 15b is back-reflected as L1' into the arc or illumination plasma region 11, 11a, 11b of the lamp 10, 10a and 10b. Because the plasma of the arc 11, 11a, 11b is optical not dense, most of the back-reflected light L1' is passing the plasma 11, 11a, 11b and is entering the opposite hemisphere. Here it is collected by a semi-reflector or secondary or directing reflector 25, 25a, 25b and can be used for further illumination.

As a result the optical extent of the collimated light bundle L2 has in the x-direction only half of the extension compared to a conventional lamp-reflector system. Even if - estimated 30 - 40% - of the back-reflected light L1' is lost due to absorption in the plasma, losses in the spherical mirror and partially shadowing by the electrodes 12, about 80% of the lumen of the lamp 10, 10a, 10b can be used.

The second lamp 10b is provided alongside with a spherical mirror 15b and connected to a semi-reflector 25b in the same way, but in opposite direction.

The directed light bundle of both semi-reflector systems 25a, 10a, 15a and 25b, 10b, 15b has approximately the same optical extent as a single conventional lamp, but with approximately 2 x 80% = 160% of the lumen output.

In figure 2A and 2B both semi-reflectors 25a, 25b are of parabolic type and are placed as narrow as possible together. They are illuminating a first integrator plate 30f which is - due to the gap between both semi-reflectors 25a, 25b - only slightly bigger than in the single lamp case.

In figure 3 both semi-reflectors 25a, 25b are of elliptical type. They are placed as narrow as possible together and are tilted slightly to focus into the same focal point. Here the light is coupled into the entrance 35i of an integrator rod 35 or light-pipe 35. The optical extent of this arrangement is only slightly bigger than in the single lamp case.

Figure 4 shows a reflective coating 16 on one hemisphere of the bulb 10T of the lamp 10. This gives a compact spherical mirror 15 and reduces the gap between both semi-reflectors 25a, 25b. The reflective coating 16 has to be resistant against the high temperature existing on the bulb 10T.

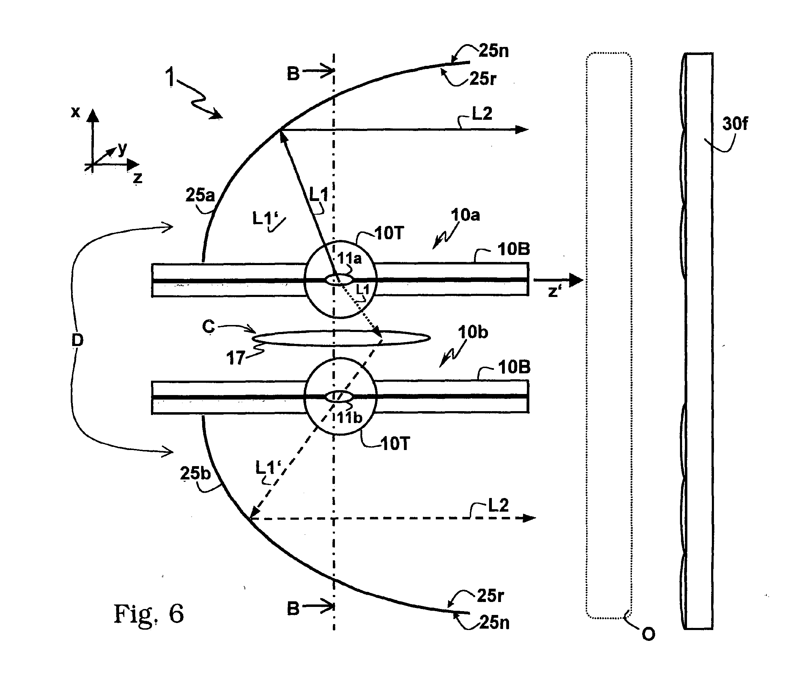

Figure 6 is a cross-sectional side view demonstrating a different preferred embodiment of the present invention, wherein in a lamp arrangement with two discharge lamps similar to that shown in Fig. 2A primary or collecting reflectors 15a und 15b for each of said lamps 10a and 10b are substituted by a common collecting and focusing optics 17 e.g. in the form of a lens or lens system 17 as said primary or collecting optical arrangement. Due to the action of the collecting and focusing optics 17 primary illumination light L1 of the first discharge lamp 10a emitted into the space portion opposite to the secondary or directing reflector 25a is refracted within said collecting and focusing optics and focused and redirected into the illuminating illumination plasma region 11b of the second discharge lamp 10b. As the illumination plasma region 11b is almost optically transparent with respect to the redirected primary illumination light L1' it passes through the illumination plasma region 11 b of the second discharge lamp 10b with a minor absorption only and is then reflected on the reflecting surface 25r of the second secondary or directing reflector 25b and leaves a secondary illumination light L2 the illumination unit 1 to enter the light output section and, for instance, the integrator plate 30f shown in Fig. 6.

**List of Reference Symbols**

| | |
|---|---|
| **1** | Illumination unit according to the present invention |
| **10** | lamp, discharge lamp |
| **10a** | lamp, discharge lamp |
| **10b** | lamp, discharge lamp |
| **10B** | lamp body |
| **10T** | discharge tube, lamp bulb |
| **11** | illuminating or illumination plasma region, plasma |
| **11a** | illuminating or illumination plasma region, plasma |
| **11b** | illuminating or illumination plasma region, plasma |

| | |
|---|---|
| **12** | electrode |
| **15** | primary or collecting optical component or reflector, spherical mirror |
| **15a** | primary or collecting optical component or reflector, spherical mirror |
| **15b** | primary or collecting optical component or reflector, spherical mirror |
| **15n** | second, outer or non-reflecting surface |
| **15r** | first, inner or reflecting surface |
| **16** | reflective coating |
| **17** | primary or collecting optical component, collecting and focusing optics, lens or lens system |
| **25** | secondary or directing reflector, parabolic / elliptical mirror |
| **25a** | secondary or directing reflector, parabolic/elliptical mirror |
| **25b** | secondary or directing reflector, parabolic / elliptical mirror |
| **25n** | second, outer or non-reflecting surface |
| **25r** | first, inner or reflecting surface |
| **30f** | first integrator plate |
| **30s** | second integrator plate |
| **35** | light pipe, integrator or integration rod |
| **35e** | light exit |
| **35i** | light entrance |
| **40** | polarization conversion system |
| **50** | condenser, condenser lens |
| **55** | condenser lenses |
| **60b** | dichroic mirror for blue |
| **60g** | dichroic mirror for green |
| **60r** | dichroic mirror for red |
| **70b** | LCD-panel for blue |
| **70g** | LCD-panel for green |
| **70r** | LCD-panel for red |
| **75** | DMD-panel/digital mirror device |
| **80** | X-tube |
| **85** | TIR-prism, total internal reflection prism |
| **90** | lens |
| **100** | projection engine |
| | |
| **A-A** | side view |
| **B-B** | front view |
| **C** | primary or collecting optical or reflector arrangement |
| **D** | secondary or directing optical or reflector arrangement |
| **L** | lamp arrangement |
| **L1** | primary illumination light |
| **L1'** | redirected primary illumination light |
| **L2** | secondary illumination light |
| **O** | light ouput section, region, area |
| **x** | x-coordinate, -axis |
| **y** | x-coordinate, -axis |
| **z** | x-coordinate, -axis |
| **z'** | electrode axis |

**Claims**

1. Illumination unit, in particular for a projection engine or the like:

   - comprising a lamp arrangement (L) having a common light output section (O), a primary or collecting optical arrangement (C) and a secondary or directing reflector arrangement (D) as a secondary or collecting optical arrangement,

   - said lamp arrangement (L) comprising at least a first and a second lamp (10, 10a, 10b) and being adapted for generating and emitting primary illumination light (L1),

   - said primary or collecting optical arrangement (C) comprising at least one primary or collecting optical component (15, 15a, 15b, 17),

   - said secondary or directing reflector arrangement (D) comprising at least one secondary or directing reflector (25, 25a, 25b),

   - each given one of said at least first and a second lamp (10, 10a, 10b) having assigned thereto at least one of said primary or collecting optical compinentss (15, 15a, 15b, 17) and at least one of said secondary or directing reflectors (25, 25a, 25b),

   - said respective assigned one primary or collecting optical component (15, 15a, 15b, 17) in each case being disposed adjacent or in close vicinity to said respective given lamp (10, 10a, 10b) and being adapted and arranged for receiving and collecting primary illumination light (L1) emitted into a first fraction or part $\Omega1$ of the illumination solid angle $\Omega$ of said respective given lamp (10, 10a, 10b) and for redirecting said collected primary illumination light (L1) as redirected primary illumination light (L1') to said respective assigned one secondary or directing reflector (25, 25a, 25b),

   - said respective assigned secondary or directing reflector (25, 25a, 25b) being adapted and arranged for receiving and collecting primary illumination light (L1) emitted into a second fraction or part $\Omega2$ of the illumination solid angle $\Omega$ of said respective given lamp (10, 10a, 10b) and said redirected primary illumination light (L1') from said respective assigned primary or collecting optical component (15, 15a, 15b, 17) and being adapted for directing and emitting said received and collected primary illumination light (L1) and said redirected primary illumination light (L1') to said common light output section (O),

   - wherein said first and second parts of fractions $\Omega1$ and $\Omega2$ of the illumination solid angle $\Omega$ of said respective given lamp (10, 10a, 10b) are essentially disjunct, complementary and/or have at most a marginal overlap,

   - wherein said at least one primary or collecting optical component (15, 15a, 15b, 17) is assigned to said first and second lamps (10a, 10b) is adapted and arranged for covering a respective first fraction or part $\Omega1$ of the respective assigned lamp (10a, 10b) illumination solid angle $\Omega$ which is in each case approximately one hemisphere or

   $$\Omega1 \approx 2\pi \cdot sr,$$

   and

   - wherein said secondary or directing reflector arrangement (D) in particular comprises first and second secondary or directing reflectors (25a, 25b) being assigned to the respective lamps (10a, 10b).

2. Illumination unit according to, wherein said lamp (10, 10a, 10b) is in each case a discharge lamp, in particular having an illumination plasma region (11) between two electrodes (12).

3. Illumination unit according to claim 2, wherein each of said primary or collecting optical components or reflectors (15, 15a, 15b, 17) is adapted and arranged for redirecting the redirected primary illumination light (L1') to the assigned secondary or directing reflector (25, 25a, 25b) by focussing said redirected primary illumination light (L1') through the illumination plasma region (11) of the respective assigned lamp (10, 10a, 10b).

4. Illumination unit according to any one of the preceding claims, wherein said primary or collecting optical arrangement (C) comprises at least a first and a second primary or collecting reflector (15, 15a, 15b) as primary or collecting optical components (15, 15a, 15b).

5. Illumination unit according to claim 2, wherein said first and second primary or collecting reflectors (15a, 15b) are assigned to said first and second lamps (10a, 10b), respectively, and are adapted and arranged for covering a respective first fraction or part $\Omega1$ of the respective assigned lamp (10a, 10b) illumination solid angle $\Omega$ which is in each case approximately one hemisphere or fulfills $\Omega1 \approx 2\pi \cdot sr$.

6. Illumination unit according to any one of the preceding claims, wherein each of said primary or collecting reflectors (15, 15a, 15b) is a spherical mirror, in particular being approximately concentrically arranged with respect to the illumination plasma region (11, 11 a, 11b) of the respective assigned lamp (10, 10a, 10b).

7. Illumination unit according to any one of the preceding claims,
wherein each of the said primary or collecting reflectors (15, 15a, 15b) is a freeform shaped mirror, in particular a general aspheric mirror.

8. Illumination unit according to any one of the preceding claims 1 to 3,

   - wherein a lens or lens system (17) - in particular with spherical or aspherical lenses - is provided as said primary or collecting optical arrangement (C) and in particular as said primary or collecting optical component (15, 15a, 15b, 17) and
   - wherein said lens or lens system (17) is arranged in between the said first and second lamps (10a, 10b) and which is adapted for covering a first fraction or part $\Omega 1$ of the respective assigned lamps (10a, 10b) illumination solid angle $\Omega$ and where the light emitting region of each lamp (10a, 10b) is imaged by means of the lens system (17) into the light emitting region of the respective other lamp.

9. Illumination unit according to any one of the preceding claims,
wherein each of said primary or collecting optical components or reflectors (15, 15a, 15b, 17) is an integral part (16) of the respective assigned lamp (10, 10a, 10b), in particular of a part of its housing or its discharge tube (10T).

10. Illumination unit according to any one of the preceding claims,
wherein each of said primary or collecting reflectors (15, 15a, 15b) is formed of a surface film (16) of a part of the respective lamps (10, 10a, 10b) surface, in particular as a reflective and non-absorbing film or multiplayer, in particular as a dielectric coating.

11. Illumination unit according to any one of the preceding claims,
wherein said second or directing reflector (25, 25a, 25b) is a parabolic mirror, in particular being adapted and arranged for directing the received primary illumination light (L1) and the received redirected primary illumination light (L1') to said common light output section (O).

12. Illumination unit according to any one of the preceding claims,
wherein said second or directing reflector (25, 25a, 25b) is an elliptic mirror, in particular being adapted and arranged for directing the received primary illumination light (L1) and the received redirected primary illumination light (L1') to said common light output section (O), in particular by having the illuminating plasma region (11, 11 a, 11b) of the respective assigned lamp (10, 10a, 10b) in its one focal region or focal point or in a vicinity thereof.

13. Illumination unit according to any one of the preceding claims,
wherein said second or directing reflector (25, 25a, 25b) is a general aspheric or freeform shaped mirror, in particular being adapted and arranged for directing the received primary illumination light (L1) and the received redirected primary illumination light (L1') to said common light output section (O).

14. Illumination unit according to any one of the preceding claims,

   - wherein said lamp arrangement (L) comprises two lamps (10a, 10b) and
   - wherein said lamps (10a, 10b) are arranged in a compact geometrical back-to-back relationship,
   - with the respective assigned primary or collecting reflectors (15a, 15b) facing each other with their outer surfaces (15n).

15. Projection engine,
wherein an illumination unit (1) according to any one of the claims 1 to 14 is provided.

16. Application of an illumination unit according to any one of the claims 1 to 14 in an optical decive, in particular

   - in a spectral measurement device, wherein a small spectral band is generated,
   - in a light pump source for a laser device for initializing the respective laser process, and/or
   - in an UV light source for producing a structure on a semiconductor wafer.

Fig. 1A

Fig. 1B

Fig. 2A

Fig. 2B

EP 1 505 435 A1

Fig. 3

Fig. 4

Fig. 5A

Fig. 5B

EP 1 505 435 A1

Fig. 6

**European Patent Office**

## EUROPEAN SEARCH REPORT

Application Number

EP 03 01 7892

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 951 139 A (JONGEWAARD MARK P ET AL) 14 September 1999 (1999-09-14) | 1 | G03B21/20 |
| Y | * the whole document * | 2 | |
| X | EP 0 997 768 A (CANON KK) 3 May 2000 (2000-05-03) | 1 | |
| Y | * abstract; figures 1-4 * | 2-7,9-16 | |
| X | US 6 425 677 B1 (CHUANG FU-MING) 30 July 2002 (2002-07-30) * abstract; figure 3 * | 1 | |
| X | US 4 916 485 A (LOTH STANISLAW ET AL) 10 April 1990 (1990-04-10) * abstract; figure 1 * | 1 | |
| Y | PATENT ABSTRACTS OF JAPAN vol. 2003, no. 11, 5 November 2003 (2003-11-05) -& JP 2003 187604 A (USHIO INC), 4 July 2003 (2003-07-04) * abstract * * the whole document * | 2-7,9-16 | **TECHNICAL FIELDS SEARCHED (Int.Cl.7)**  G03B |

The present search report has been drawn up for all claims

| Place of search | Date of completion of the search | Examiner |
|---|---|---|
| MUNICH | 27 January 2004 | Aratari, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 03 01 7892

This annex lists the patent family members relating to the patent documents cited in the above-mentioned European search report.
The members are as contained in the European Patent Office EDP file on
The European Patent Office is in no way liable for these particulars which are merely given for the purpose of information.

27-01-2004

| Patent document cited in search report | | Publication date | Patent family member(s) | | Publication date |
|---|---|---|---|---|---|
| US 5951139 | A | 14-09-1999 | NONE | | |
| EP 0997768 | A | 03-05-2000 | JP | 3347676 B2 | 20-11-2002 |
| | | | JP | 2000137290 A | 16-05-2000 |
| | | | EP | 0997768 A2 | 03-05-2000 |
| | | | US | 6431727 B1 | 13-08-2002 |
| US 6425677 | B1 | 22-08-2002 | US | 2002114158 A1 | 22-08-2002 |
| US 4916485 | A | 10-04-1990 | NONE | | |
| JP 2003187604 | A | 04-07-2003 | NONE | | |

EPO FORM P0459

For more details about this annex : see Official Journal of the European Patent Office, No. 12/82